# EUROPEAN PATENT APPLICATION

(11) **EP 2 312 893 A1**
(43) Date of publication of application: **20.04.2011**
(21) Application number: 09305988.9
(22) Date of filing: 15.10.2009
(51) Int. Cl.: H04W 60/06, H04W 80/04

(54) **IP flow removal method for untrusted non-3GPP access points**

(71) Applicant: FRANCE TELECOM, 75015 Paris (FR)
(72) Inventor: Ahmed, Tansir, London W45XS (GB); Barankanira, Delphin, 92130 Issy les Moulineaux (FR)
(74) Representative: Hassine, Albert

(57) **Abstract**

The present invention relates to an IP flow removal method for removing an IP flow linking a user equipment (UE) to a packet data network server (HA) via an intermediate access point (ePDG), wherein the intermediate access point is an untrusted non-3GPP access point. A binding entry for routing said IP flow is stored in the packet data network server (HA), and this binding entry is removed (105) in the packet data network server (HA) upon reception (103) of an IP flow removal message initiated by the user equipment (UE). The present invention relates also to a network system adapted to perform such a method and a computer program product comprising instructions for implementing such a method.

## Description

### FIELD OF THE INVENTION

The present invention relates to an IP flow removal method for an untrusted non-3GPP access point, in particular for an untrusted non-3GPP access point using a PIMPv6-based S2b interface.

### BACKGROUND OF THE INVENTION

The eighth release of the Evolved Packet System, also referred to as Rel-8 EPS or 3GPP Rel-8 (third generation partnership project technical specification TS 23.402 v9.0.0, "Architecture Enhancements for Non-3GPP Accesses (Release 9)", March 2009) has introduced a multi-access 3GPP system, where different heterogeneous access systems are connected to a common core network.

However, in this eighth release of the Evolved Packet System, the subscriber cannot communicate using multiple accesses simultaneously. The subscriber can establish a single Packet Data Network (also referred to as PDN) connection or multiple simultaneous PDN connections in EPS, but all the traffic exchanged by the subscriber, regardless of the PDN connection it belongs to, is routed through the same access system.

Devices with multiple interfaces (e.g. 3GPP , WiFi, WiMAX etc.) are becoming commonly available and the set of applications running in the mobile devices is diversifying with some applications suited to run over 3GPP access systems and other applications well suited to run over some other complementary access systems (e.g. FTP transfer via WiFi in parallel to VoIP over EPS).

In these circumstances, it has become important to allow dynamic allocation of different IP flows to different access systems as per their requirements, so that the user experience can be enhanced while the connectivity cost for the operator can be optimized. Recently, studies related to multi access PDN connectivity and IP flow mobility in EPS have gathered pace. However, the selective removal of IP flows still remains incompletely addressed in the current technical specifications.

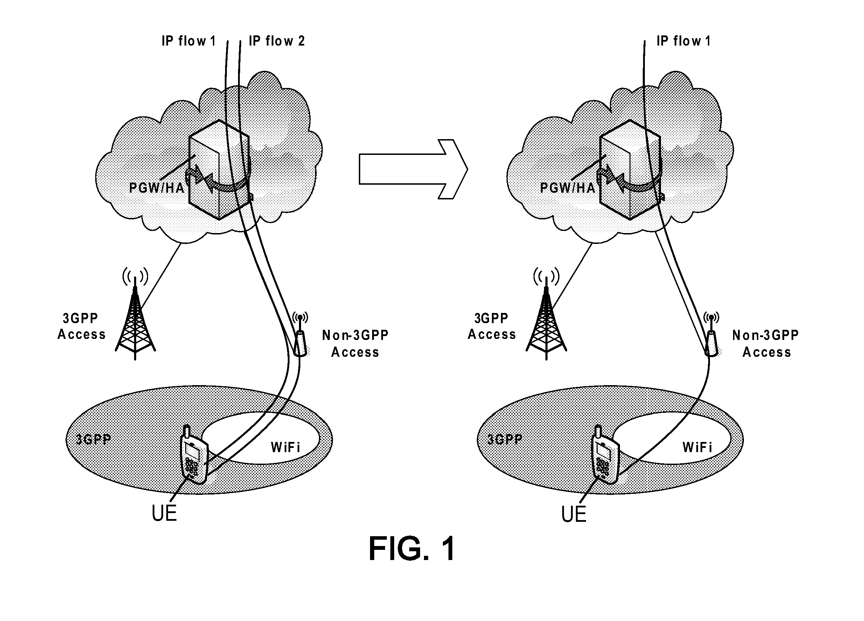

Figure 1 illustrates the problem arising in the prior art when the user equipment UE has already established a PDN connection and wishes to remove a specific IP flow.

In the left-hand side of figure 1, user equipment UE has 2 active IP flows (IP flow 1 and 2) via a non-3GPP access point (for instance a WiFi antenna).

It is possible that, at some point, the user equipment UE wants to remove IP flow 2 from the access point, while keeping IP flow 1 active, for example when the user decides to stop using the service associated with IP flow 2, as illustrated in the right-hand side of figure 1.

It is possible to initiate such an IP flow removal from the user equipment UE when the non-3GPP access point is a trusted one, i.e. when the non-3GPP access belongs to the network of the user's provider or to a provider's network having a trusted relationship with the user's provider.

In those cases, if for instance the connection between the user equipment UE and the non-3GPP access point is managed according to the PMIPv6-based S2a interface or DSMIPv6-based S2c interface (according to IETF Network WG, "Mobile IPv6 Support for Dual Stack Hosts and Routers", RFC 5555, June 2009), the user equipment UE can initiate the removal of a particular IP flow among multiple active IP flows via the non-3GPP access by using the procedures for UE-initiated resource request/release specified in Rel-8 EPS (under its section 6.7).

However, the selective IP flow removal procedures defined under section 6.7 of Rel-8 EPS apply only to trusted non-3GPP access point. When the non-3GPP access point is an untrusted one, i.e. when the user's provider does neither directly control nor have a trusted relationship with the network provider controlling the non-3GPP access point, the Rel-8 EPS specification does not specify how the user equipment can remove a particular IP flow among multiple active IP flows via such an untrusted non-3GPP access point. Actually, so far, no IP flow removal procedure has been foreseen in any technical specification in order to allow the user equipment to initiate the IP flow removal, when the non-3GPP access point is an untrusted one. There is therefore no solution, at the present time, to the problem of selectively removing an IP flow in a network with a connection between user equipment UE and an untrusted non-3GPP access point.

It is thus the object of the present invention to overcome the above-identified difficulties and disadvantages by proposing a solution to allow a user equipment to initiate an IP flow removal for an untrusted non-3GPP access point.

### SUMMARY OF THE INVENTION

According to a first aspect of the present invention, there is provided an IP flow removal method for removing an IP flow linking a user equipment to a packet data network server via an intermediate access point, wherein the intermediate access point is an untrusted non-3GPP access point, wherein a binding entry for routing the IP flow is stored in the packet data network server and wherein the binding entry is removed in the packet data network server upon reception of a IP flow removal message initiated by the user equipment.

Thus, the present invention provides a method for removing an IP flow, wherein the method is initiated by user equipment, which works with untrusted non-3GPP access points, and therefore compensates for the lack of solution in the present 3GPP technical specifications when it comes to deal with such untrusted non-3GPP access points from the user equipment side. Dynamic allocation of IP flows can therefore be extended to networks interfacing with these types of untrusted non-3GPP access points.

Preferably, the IP flow removal message comprises a binding update message transmitted by the untrusted non-3GPP access point to the packet data network server after reception of an IP flow removal trigger message transmitted by the user equipment.

Advantageously, the IP flow removal trigger message comprises routing information which specifies the IP flow to be removed. With such routing information, it is possible to organize a selective IP flow removal. Thus, the user equipment has the flexibility of removing one or more IP flows among multiple active IP flows via the same untrusted non-3GPP interface as desired by the user.

Preferably, the binding update message comprises at least one parameter corresponding to a routing filter deduced from the routing information comprised in the IP flow removal trigger message, the binding entry being removed based on said routing filter. This results in a direct and faster processing of the IP flow removal.

In a preferred embodiment wherein the user equipment interfaces with the enhanced packet data gateway in accordance with the 3GPP TR 23.861 v1.1.0 specification, the IP flow removal trigger message comprises an IP Flow Mobility Trigger message as defined in this 3GPP TR 23.861 v1.1.0 specification. This allows reusing a message already existing in the specifications without having to create a new one for the purpose of triggering selective IP flow removal.

In another preferred embodiment wherein the user equipment interfaces with the enhanced packet data gateway in accordance with at least one specific protocol, the IP Flow Remove Trigger message is not defined in said at least one protocol. This embodiment avoids the potential problem of confusion on the meaning of a protocol message when used for different purposes.

Preferably, after the binding entry removal step, an uplink modification procedure step is performed between the packet data network server and at least one of uplink network elements used by the IP flow, wherein the at least one uplink network element is informed of the removal of the IP flow. This allows the uplink network to take the necessary steps in order to register the IP flow removal and to stop allocating uselessly resources to this removed IP flow.

In a preferred embodiment wherein the enhanced packet data gateway interfaces with the uplink network elements in accordance with the 3GPP TS 23.203 v9.0.0 technical specification, this uplink modification procedure comprises an IP-CAN session modification procedure as defined in said 3GPP TS 23.203 v9.0.0 technical specification.

Advantageously, an IP flow removal confirmation message is sent by the packet data network server to the enhanced packet data gateway after the removal of the binding entry. This confirmation message allows the enhanced packet data gateway to take the necessary steps in order to register the IP flow removal and to stop allocating uselessly resources to this removed IP flow.

Advantageously, after reception of the IP flow removal confirmation message, the enhanced packet data gateway transmits an IP flow removal acknowledgement message to the user equipment. This acknowledgement message allows the user equipment to take the necessary steps in order to register the IP flow removal and to stop allocating uselessly resources to this removed IP flow.

In a preferred embodiment wherein the user equipment interfaces with the enhanced packet data gateway in accordance with the 3GPP TR 23.861 v1.1.0 specification, this IP flow removal acknowledgement message comprises the IP Flow Mobility Acknowledgement message as defined in this 3GPP TR 23.861 v1.1.0 specification. This allows reusing a message already existing in the specifications without having to create a new one for the purpose of acknowledging the successful removal of a specific IP flow.

In another preferred embodiment wherein the user equipment interfaces with the enhanced packet data gateway in accordance with at least one specific protocol, the IP Flow Remove Acknowledgement message is not defined in said at least one protocol. This embodiment avoids the potential problem of confusion on the meaning of a protocol message when used for different purposes.

Preferably, after reception of the IP flow removal acknowledgement message by the user equipment, a new routing rule is enforced between the user equipment and the enhanced packet data gateway, in order to redefine the routing relationship between the user equipment and the enhanced packet data gateway.

In an embodiment of the present invention, the user equipment interfaces with the untrusted non-3GPP access point in accordance with the protocol for PMIPv6-based S2b interface. In such an embodiment, whereas no IP flow removal procedure was foreseen in the protocol for PMIPv6-based S2b interface, an IP flow removal method which is initiated by the user equipment is rendered possible even in the absence of a direct PMIPv6 tunnel between the user equipment and the packet data network gateway, i.e. the home agent.

According to a second aspect of the present invention, there is provided a network system comprising a packet data network server exchanging data packets, on at least one IP flow, with at least one user equipment through at least one intermediate access point. In this network system, the intermediate access point is an untrusted non-3GPP access point and the network system is adapted to carry out the steps of an IP flow removal method as described above, in order to remove at least one of the IP flows.

According to a third aspect of the invention, there is provided a computer program product for implementing the steps of the aforementioned IP flow removal method when loaded and run on computer means of a network device.

Other aspects of the invention are recited in the dependent claims attached hereto.

### BRIEF DESCRIPTION OF THE DRAWINGS

Other features and advantages of the invention will become apparent from the following description of non-limiting exemplary embodiments, with reference to the appended drawings, in which:
- Figure 1, already discussed, illustrates the IP flow removal problem as it stands now in the prior art; and
- Figure 2 shows a call flow diagram illustrating the IP flow removal method in accordance with the present invention.

### DETAILED DESCRIPTION OF EMBODIMENTS OF THE INVENTION

Next some embodiments of the present invention are described in more detail with reference to the attached figures.

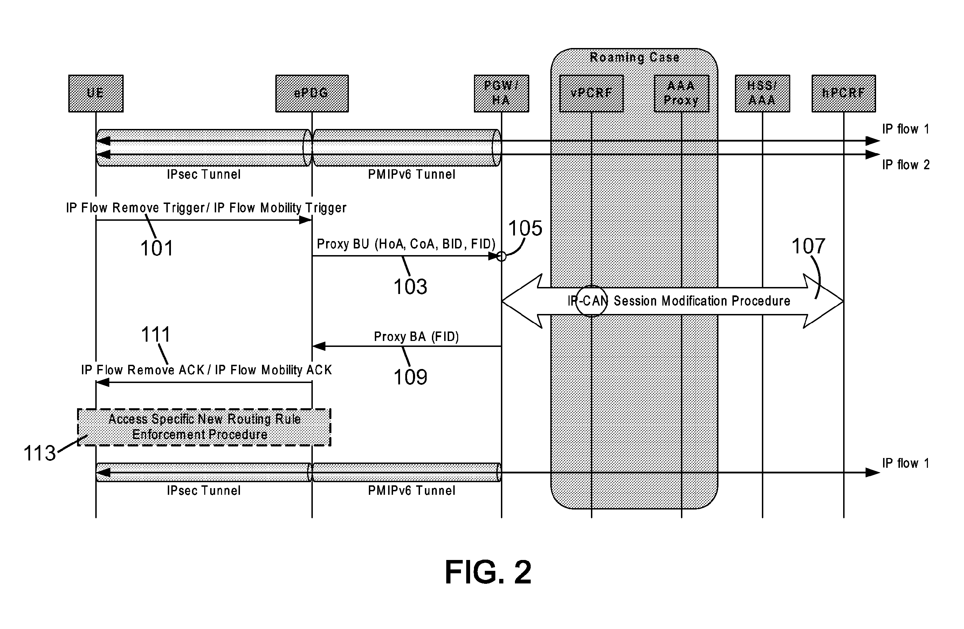

Figure 2 shows a call flow diagram illustrating the IP flow removal method in accordance with the present invention.

In this figure 2, it is assumed that the user equipment UE has already established a connection with a packet data network PDN, for instance via the packet data network data gateway PGW, i.e. the Home Agent HA.

In a non-limiting example of such a connection, the user equipment UE has two active IP flows IP flow1 and IP flow 2 via the enhanced packet data gateway ePDG of an untrusted non-3GPP access network.

It is emphasized once again here that an untrusted network/access point is defined as a network/access point on which the user's provider does neither have a direct control nor a trusted relationship with the network provider controlling the network/access point.

The active IP flows can be managed according to a specific protocol, for instance the protocol for PMIPv6-based S2b interface, for which no IP flow removal procedure has been foreseen and for which there is no direct PMIPv6 tunnel between the user equipment UE and the packet data network gateway PGW. Naturally, the present invention applies to any number of active IP flows, even to a single active IP flow, that need to be removed.

The IP flows take place through a first established IPsec tunnel between the user equipment UE and the enhanced packet data gateway ePDG of the untrusted non-3GPP access network. The IP flows take place, further on the uplink, through a second established PMIPv6 tunnel between the packet data gateway ePDG, which can also be seen as a Mobility Access Gateway (the so-called MAG), and the packet data gateway PGW, i.e. the Home Agent HA.

When the user equipment UE has decided to remove IP flow 2, the IP flow removing method works as follows:
First, during an IP flow removal triggering step 101, the user equipment UE sends an IP flow removal trigger message to the enhanced packet data gateway ePDG.

For this purpose, a new UE-initiated trigger message (called "IP Flow Remove Trigger" in figure 2), which is not previously defined in the interface(s) used by the user equipment UE and the enhanced packet data gateway ePDG to communicate with each other, may be used in a first embodiment.

The use of a new trigger message specifically designed to this purpose is advantageous for avoiding any accidental IP flow removal which could occur when reusing already designed trigger message.

Alternatively, in a second embodiment, the user equipment UE may use an already existing trigger message, for instance the "IP Flow Mobility Trigger" message already proposed in the 3GPP specification TR 23.861 v1.1.0 ("Multi Access PDN Connectivity and IP Flow Mobility (Release 9)", April 2009).

The "IP Flow Mobility Trigger" message was originally intended for use when either an IP flow is moved to non-3GPP access point from 3GPP access point, or when a new IP flow is initiated via non-3GPP access point. In this second embodiment, we propose to introduce a third intended use, i.e. the removal of a specific IP flow initiated by the user equipment UE if the existing "IP Flow Mobility Trigger" message is used.

Thus, either with the new "IP Flow Remove Trigger" or the existing "IP Flow Mobility Trigger", the UE is able to notify the enhanced packet data gateway ePDG about selective removal of an IP flow.

The IP flow removal trigger message, be it a new "IP Flow Remove Trigger" message or the existing "IP Flow Mobility Trigger" message, can be transferred from the user equipment UE to the enhanced packet data gateway ePDG using any one of the following ways:
- Access specific signaling.
- Router Solicitation.
- Extensions of existing NAS messages or new NAS messages.
- PCO extensions.

The IP flow removal trigger message contains routing rules specifying the IP flow to be removed, i.e. IP flow 2 in the present example.

Then, during a binding update step 103, the enhanced packet data gateway ePDG sends a proxy binding update message, called "Proxy BU" message, to the Packet data network Gateway PGW indicating the IP flow to be removed. Such a binding update message can contain usual parameters such as, for instance, the user equipment Home Address HoA, its Care-of Address CoA, a Binding Identifier BID and a Flow Identifier FID. The Binding Identifier BID and Flow Identifier FID are recent extensions to usual parameters like HoA and CoA. The Binding Identifier BID is specified in IETF MEXT WG, "Multiple Care-of Addresses Registration", May 2009. The Flow Identifier FID is specified in IETF MEXT WG, "Flow Bindings in Mobile IPv6 and Nemo Basic Support", April 2009.

The "Proxy BU" message contains parameters corresponding to a routing filter deduced from the routing rules sent by the user equipment UE. The routing filter within the "Proxy BU" message can be sent as a mobility option, as a new extension to PMIPv6 protocol, or as PCO options in a PMIPv6 signaling procedure between the enhanced packet data gateway ePDG and the packet data network gateway PGW.

During a binding entry removing step 105, the packet data network gateway PGW removes the binding entry for IP flow 2 from the Binding Cache of the Home Agent HA based on the received routing filter.

At that stage, the IP flow 2 is interrupted since incoming downlink IP packets cannot reach any longer the user equipment UE. The IP flow removal procedure can be considered as achieved to a certain extent.

In a preferred embodiment, an uplink modification procedure step 107 follows, where the Home Agent HA executes an uplink modification procedure reflecting the changes due to removal of the IP flow.

For instance, such a modification procedure can rely on the IP-CAN Session Modification Procedure specified in the 3GPP technical specification TS 23.203 v9.0.0 ("Policy and Charging Control Architecture (Release 9)", March 2009).

On figure 2, such a modification procedure step 107 allows to warn the different elements of the IP flow on the uplink side of the Home Agent HA. These elements in the present case are the visited Policy and Charging Rules Function vPCRF, the AAA Proxy Server, the Home Subscriber Server HSS or the AAA Server and finally the home Policy and Charging Rules Function hPCRF.

At the end of this modification procedure step 107, all the network elements on the uplink side of the Home Agent HA have been modified in order to adapt to the removal of IP flow 2. Such a step is therefore advantageous in that these elements do not keep on allocating useless resources to a removed IP flow.

At that stage, only the network elements on the downlink side of the Home Agent HA are unaware of the successful removal of the IP flow 2. If these downlink elements are not informed of the successful IP flow removal, there is a risk that uplink data packets belonging to IP flow 2 are still uselessly sent from the user equipment UE towards the Home Agent HA

It is therefore advantageous to proceed further with an IP flow removal confirmation step 109 wherein the packet data network gateway PGW, i.e. the Home Agent HA confirms the removal of IP flow 2 by sending a confirmation message Proxy Binding Acknowledgement, called "Proxy BA" message, to the enhanced packet data gateway ePDG. The enhanced packet data gateway ePDG can then stop using any resource for the removed IP flow 2.

In a preferred embodiment, this IP flow removal confirmation step 109 is followed by an IP flow acknowledgement step 111, which corresponds to the first step 101 described above.

During this IP flow acknowledgement step 111, the enhanced packet data gateway ePDG notifies the user equipment UE about the successful removal of IP flow 2 on the uplink side, by sending an IP flow removal acknowledgement message to the user equipment UE.

For this purpose, a new acknowledgement message ("IP Flow Remove ACK") may be used in a first embodiment. This is particularly adapted when a new trigger "IP Flow Remove Trigger" message is used as well in the first step 101.

Alternatively, in a second embodiment, the user equipment UE may use the "IP Flow Mobility ACK" message already proposed in the 3GPP specification TR 23.861 v1.1.0 ("Multi Access PDN Connectivity and IP Flow Mobility (Release 9)", April 2009).

This second embodiment is particularly advantageous when the existing "IP Flow Mobility Trigger" message is used as well in the first step 101. Such an embodiment is advantageous in that it allows reusing already existing acknowledgement messages without having to create new ones for that specific use.

After this IP flow acknowledgement step 111, the user equipment UE is aware of the successful IP flow removal on the downlink side and can take any action to prevent useless resource allocation to this removed IP flow. For instance, a routing rule enforcement step 113 can follow where new access technology specific routing rule may be enforced between the user equipment UE and the enhanced packet data gateway ePDG to reflect the changes due to removal of IP flow 2.

After this routing rule enforcement step 113, IP flow 2 is completely removed, both on the uplink and on the downlink sides, and only IP flow 1 remains active via the untrusted non-3GPP access using a PMIPv6-based S2b interface.

The invention relates also to a network system comprising a packet data network server connected to one or more intermediate non-3GPP access point, which is an untrusted non-3GPP access point using the PMIPv6-based S2b interface. A user equipment UE exchanges data packets on one or more IP flows with the data network server through at least one intermediate access point ePDG. Such a network system is adapted to exchange the above-mentioned messages in order to remove one or more IP flows among the active ones, by performing the IP flow removal method according to the present invention.

The invention also relates to a computer program product that is able to implement any of the method steps as described above when loaded and run on computer means of a communication device. The computer program may be stored/distributed on a suitable medium supplied together with or as a part of other hardware, but may also be distributed in other forms, such as via the Internet or other wired or wireless telecommunication systems.

While the invention has been illustrated and described in detail in the drawings and foregoing description, such illustration and description are to be considered illustrative or exemplary and not restrictive, the invention being not restricted to the disclosed embodiments. Other variations to the disclosed embodiments can be understood and effected by those skilled in the art in practicing the claimed invention, from a study of the drawings, the disclosure and the appended claims.

In the claims, the word "comprising" does not exclude other elements or steps, and the indefinite article "a" or "an" does not exclude a plurality. A single processor or other unit may fulfil the functions of several items recited in the claims. The mere fact that different features are recited in mutually different dependent claims does not indicate that a combination of these features cannot be advantageously used. Any reference signs in the claims should not be construed as limiting the scope of the invention.

## Claims

1. An IP flow removal method for removing an IP flow linking a user equipment (UE) to a packet data network server (HA) via an intermediate access point (ePDG), **characterised in that** the intermediate access point is an untrusted non-3GPP access point, **in that** a binding entry for routing said IP flow is stored in the packet data network server (HA), and **in that** said binding entry is removed (105) in the packet data network server (HA) upon reception (103) of a IP flow removal message initiated by the user equipment (UE).

2. The IP flow removal method according to claim 1, **characterised in that** the IP flow removal messages comprises a binding update message (Proxy BU) transmitted (103) by the untrusted non-3GPP access point to the packet data network server (HA) after reception of an IP flow removal trigger message transmitted (101) by the user equipment (UE).

3. The IP flow removal method according to claim 2, **characterised in that** the IP flow removal trigger message comprises routing information which specifies the IP flow to be removed.

4. The IP flow removal method according to claim 3, **characterised in that** binding update message (Proxy BU) comprises at least one parameter corresponding to a routing filter deduced from the routing information comprised in the IP flow removal trigger message, the binding entry being removed (105) based on said routing filter.

5. The IP flow removal method according to any one of claims 2 to 4, wherein the user equipment (UE) interfaces with the enhanced packet data gateway (ePDG) in accordance with the 3GPP TR 23.861 v1.1.0 specification, the method being **characterised in that** the IP flow removal trigger message comprises an IP Flow Mobility Trigger message as defined in said 3GPP TR 23.861 v1.1.0 specification.

6. The IP flow removal method according to any one of claims 2 to 4, wherein the user equipment (UE) interfaces with the enhanced packet data gateway (ePDG) in accordance with at least one specific protocol, the method being **characterised in that** the IP flow removal trigger message is not defined in said at least one protocol.

7. The IP flow removal method according to any one of claims 1 to 6, **characterised by**, after the binding entry removal step (105), an uplink modification procedure step (107) between the packet data network server (HA) and at least one of uplink network elements used by the IP flow, wherein said at least one uplink network element is informed of the removal of the IP flow.

8. The IP flow removal method according to claim 7, wherein the enhanced packet data gateway (ePDG) interfaces with said uplink network elements in accordance with the 3GPP TS 23.203 v9.0.0 technical specification, the method being **characterised in that** the uplink modification procedure (107) comprises an IP-CAN Session Modification Procedure as defined in said 3GPP TS 23.203 v9.0.0 technical specification.

9. The IP flow removal method according to any one of claims 1 to 8, **characterised in that** an IP flow removal confirmation message (Proxy BA) is sent (109) by the packet data network server (HA) to the enhanced packet data gateway (ePDG) after the removal of the binding entry (105).

10. The IP flow removal method according to claim 9, **characterised in that**, after reception (109) of the IP flow removal confirmation message, the enhanced packet data gateway (ePDG) transmits (111) an IP flow removal acknowledgement message to the user equipment (UE).

11. The IP flow removal method according to claim 10, wherein the user equipment (UE) interfaces with the enhanced packet data gateway (ePDG) in accordance with the 3GPP TR 23.861 v1.1.0 specification, the method being **characterised in that** the IP flow removal acknowledgement message comprises an IP Flow Mobility Acknowledgement message as defined in said 3GPP TR 23.861 v1.1.0 specification.

12. The IP flow removal method according to claim 10, wherein the user equipment (UE) interfaces with the enhanced packet data gateway (ePDG) in accordance with at least one specific protocol, the method being **characterised in that** the IP flow removal acknowledgement message is not defined in said at least one protocol.

13. The IP flow removal method according to any one of claims 1 to 12, **characterised in that** the user equipment (UE) interfaces with the untrusted non-3GPP access point (ePDG) in accordance with the protocol for PMIPv6-based S2b interface.

14. A network system comprising a packet data network server (HA) exchanging data packets, on at least one IP flow, with at least one user equipment (UE) through at least one intermediate access point (ePDG), **characterised in that** the intermediate access point is an untrusted non-3GPP access point and **in that** the network system is adapted to carry out the steps of an IP flow removal method according to any one of claims 1 to 13 in order to remove at least one of said IP flows.

15. A computer program product comprising instructions for implementing the steps of an IP flow removal method according to any one of claims 1 to 13 when loaded and run on computer means of a network device.
